# EUROPÄISCHE PATENTSCHRIFT

(11) **EP 3 575 057 B1**
(45) Veröffentlichungstag und Bekanntmachung des Hinweises auf die Patenterteilung: **13.01.2021**
(21) Anmeldenummer: 19174293.1
(22) Anmeldetag: 14.05.2019
(51) Int. Cl.: B29C 45/27

(54) **ANGUSSSYSTEM FÜR SPRITZGUSSVERFAHREN**
MOULDING SYSTEM FOR INJECTION MOULDING
SYSTÈME DE MOULAGE POUR UN PROCÉDÉ DE MOULAGE PAR INJECTION

(30) Priorität: 30.05.2018 DE 102018208638
(43) Veröffentlichungstag der Anmeldung: 04.12.2019
(73) Patentinhaber: Ford Global Technologies, LLC, Dearborn, MI 48126 (US)
(72) Erfinder: Alves, Bruno, 50354 Hürth (DE); Ber, Baha, 50765 Köln (DE); Heinisch, Christian, 50226 Frechen (DE); Werner, Lieven, 50169 Kerpen (DE); Schneider, Pascal, 50259 Pulheim (DE)
(74) Vertreter: Dörfler, Thomas

(56) Entgegenhaltungen:
- GB-A- 1 178 676
- JP-A- S5 517 569
- JP-A- S60 247 530

## Beschreibung

Die vorliegende Erfindung betrifft ein Angusssystem für eine Spritzgussmaschine mit den Merkmalen des Oberbegriffs des Anspruchs 1. Des Weiteren betrifft die Erfindung ein Montageverfahren für ein Angusssystem für eine Spritzgussmaschine mit den Merkmalen des Oberbegriffs des Anspruchs 7.

Bei einem Spritzgussverfahren wird mittels einer Spritzgussmaschine Kunststoff oder ein anderer Werkstoff plastifiziert bzw. verflüssigt und in ein Spritzgusswerkzeug unter Druck eingespritzt, worin er anschließend durch Abkühlung ausgehärtet und nach dem Öffnen des Spritzgusswerkzeugs, auch einfach als Werkzeug bezeichnet, als Fertigteil entnommen werden kann. Der Hohlraum des Werkzeugs, die sogenannte Kavität, bestimmt dabei die Werkstückform und gegebenenfalls die Oberflächenstruktur des fertigen Teils, des Werkstücks. Für jede neue Werkstückform wird daher im Wesentlichen ein individuell gefertigtes Werkzeug mit einer individuell für die zu fertigende Werkstückform ausgebildeten Kavität benötigt. Die Kosten für das Werkzeug machen einen erheblichen Teil der Investitionen für eine neue Werkstückform aus, womit bei kleiner Stückzahl die Kosten je Werkstückform, bspw bei Prototypen, sehr hoch sind.

Um ein neues Werkzeug zusammenzustellen, werden zudem verschiedene Standardkomponenten benötigt, wobei die einzelnen Komponenten meist aus einer großen Auswahl an Kaufteilen verfügbar sind. Eine stets benötigte Standardkomponente ist dabei die sogenannte "Angussbuchse" oder "Angießbuchse" welche im weiteren Verlauf allgemein als Angussstück bezeichnet wird. Ein Angussstück besteht meistens aus einem Rohrabschnitt und einem Flanschabschnitt, wobei an eine typischerweise als halbkugelartige Vertiefung gestaltete "Andockeinreichtung" des Flanschabschnitts die Düse einer Einspritzvorrichtung, bspw einer Schnecke, zum Einspritzen ansetzt. Auch im Prototypenbau, in dem sich die einzelnen Werkstückformen immer unterscheiden, ist eine große Anzahl an Größen verschiedener Angussstücke auf dem Markt verfügbar, wobei ein Angussstück stets speziell für ein bestimmtes Werkzeug beschafft werden muss, um die notwendige Toleranzklasse der Passung (H7-g6; Spielpassung : Teile ohne merkliches Spiel beweglich) einhalten zu können. Dies macht einen relativ großen Kostenanteil gemessen an den Gesamtkosten eines Werkzeugs für Prototypen aus.

Ein weiteres Problem besteht darin, die richtige Länge des Angussstücks zu wählen, da nur sehr geringe Toleranzen (H7-g6) zwischen Angussstück und Werkzeug zulässig sind. Außerdem ist es nicht möglich, das Angussstück weiter in das Werkzeug hineinzuschieben, wenn sich ein unerwünschtes Spiel zwischen dem Ende des Rohrabschnitts und der Kavität ergibt. Für gewöhnlich benötigt der Monteur daher mehr als drei Stunden, um das Angussstück in die düsenseitige Spritzgussanordnung einzubauen und es ist typischerweise ein mehrfaches Nacharbeiten notwendig, um eine hinreichend genaue Montageausführung zu gewährleisten.

Aus dem Stand der Technik ist in der US 5,096,410 A ein Angussstück bekannt, welches einen Flanschabschnitt und einen Rohrabschnitt aufweist, wobei ein Zentrierring den Flanschabschnitt über zwei Befestigungsschrauben mit der Spritzgussvorrichtung verbindet. Der Rohrabschnitt ist umgeben von einer äußeren Hülse, wobei zwischen dem Rohrabschnitt und der Hülse ein Zwischenraum zur Temperierung des Angussstücks mit Wasser vorgesehen ist. Sowohl die Hülse, als auch der Zentrierring bilden Kontaktwandungen aus, zwischen denen der Flanschabschnitt des Angussstücks formschlüssig gehalten ist.

In der US 2008/0131547 A1 werden in einer Spritzgussmaschine zur gleichzeitigen Produktion mehrerer Werkstücke rohrartige Angussstücke zyklisch und horizontal bewegt. Um die Angussrohre bei jedem Zyklus in fluiddichte Wirkverbindung mit den Einspritzvorrichtungen bringen zu können, sind Führungsrahmen vorgesehen, wobei die seitlichen Begrenzungswandungen des Führungsrahmens zur Führung der Angussstücke mittels Stellschrauben bewegt werden können.

Aus dem Stand der Technik ist ferner in der CN 104786434 A ein austauschbares Angussstück mit einer rippenförmigen Arretiervorrichtung zum Zentrieren des Angussstücks bekannt, wobei die Arretiervorrichtung in formschlüssigen Eingriff mit einer komplementären Nut in einer Formplatte gebracht wird. Ringförmige Dichtungen zwischen Angussstück und Formplatte dichten die Vorrichtung gegenüber einer Aufspannplatte ab.

Die CN 202716439 U betrifft eine Angussvorrichtung für eine Spritzgussform mit einem Flanschelement und einem Rohrelement, wobei beide gemeinsam einen konisch verlaufenden Angusskanal ausbilden. Flanschelement und Rohrelement sind als separate Bauteile ausgeführt, wobei das Flanschelement über Befestigungsschrauben mit einer Fixiervorrichtung verbunden ist. Diese Vorrichtung erlaubt, das Flanschelement auszutauschen und gleichzeitig das Rohrelement weiter zu verwenden.

Die US 6,852,264 B2 bezieht sich auf ein Angusssystem, wobei der Angusskanal gleichzeitig ein Fluidverteilungssystem ausbildet, welches vier Angussrohre und zugehörige Formhohlraum-Einspritzdüsen mit verflüssigtem Kunststoffmaterial versorgt.

Die EP 0 344 381 A2 betrifft unter anderem zwei zueinander koaxial angeordnete Angussstücke, welche durch eine dazwischenliegende, ebenfalls koaxiale Spiralfeder zueinander in Abstand gehalten werden. Beim Einspritzvorgang drückt die Düse der Einspritzvorrichtung an einer halbkugelförmigen Vertiefung gegen das erste Angussstück, wobei die Spiralfeder gestaucht wird. Dabei wird das erste Angussstück gegen das zweite Angussstück gepresst, wodurch sich ein durchgehender Angusskanal ausbildet.

Die US 5,334,006 A beschreibt ein Angussstück mit einem Rohrelement und einem Flanschelement, wobei eine abschnittsweise Verdickung des Rohrelements ein Außengewinde und außerdem drei kranzförmig angeordnete Innengewindebohrungen zur Montage des Flanschelements und einer Fixierpatte aufweist. Zur Festlegung der verfügbaren Eintauchtiefe des Rohrelements in die Platten der Spritzgussmaschine wird auf das Außengewinde eine zylindrische Abstandmuffe aufgeschraubt, wobei eine Stirnfläche der Abstandmuffe als Anschlagfläche gegenüber einer Platte der Spritzgussmaschine fungiert. Je nach Länge der verwendeten Muffe bzgl. der Zylinderachse können verschiedene Eintauchlängen des Rohrelements festgelegt werden.

Nachteilig ist am aufgeführten Stand der Technik, dass jeweils individuelle Angusssysteme für ein neu anzufertigendes Werkzeug benötigt werden. Entweder sind die Angusssysteme überhaupt nicht für unterschiedliche Werkzeuge verwendbar oder es müssen wenigstens Bestandteile individuell gefertigt werden.

Die GB 1 178 676 A offenbart ein Angusssystem für eine düsenseitige Spritzgussanordnung einer Spritzgussmaschine, bei dem ein Angussstück und ein Befestigungsmittel zueinander verstellbar ausgebildet sind und das Angusssystem Stellmittel zum Einstellen eines Abstands zwischen einem Flanschabschnitt des Angussstücks und dem Befestigungsmittel aufweist.

Angesichts des aufgezeigten Standes der Technik bieten Angusssysteme noch Raum für Verbesserungen, insbesondere die Wiederverwendbarkeit standardisierter Teile und eine vereinfachte Montage. Der Erfindung liegt daher die Aufgabe zugrunde, ein einstellbares und vielseitig verwendbares Angusssystem für ein Spritzgussverfahren bzw. ein Spritzgusswerkzeug einer Spritzgussmaschine bereitzustellen.

Erfindungsgemäß wird die Aufgabe durch ein Angusssystem mit den Merkmalen des Anspruchs 1 und ein Montageverfahren für ein Angusssystem mit den Merkmalen des Anspruchs 7 gelöst. Weitere vorteilhafte Ausgestaltungen der Erfindung sind in den Unteransprüchen offenbart.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die Erfindung betrifft ein Angusssystem der eingangs genannten Art für eine düsenseitige Spritzgussanordnung einer Spritzgussmaschine zum Einleiten eines plastifizierbaren und/oder plastifizierten Kunststoffmaterials in ein Spritzgusswerkzeug der Spritzgussmaschine entlang eines Angusskanals, dessen Mittelachse eine Einspritzachse festlegt. Dabei weist das Angusssystem ein den Angusskanal zumindest teilweise ausbildendes Angussstück mit einem Rohrabschnitt und einem Flanschabschnitt, sowie ein Befestigungsmittel zur Befestigung des Angusssystems mit dem Werkzeug und zur Ausrichtung des Angussstücks entlang der Einspritzachse auf.

Erfindungsgemäß sind das Angussstück und das Befestigungsmittel zueinander verstellbar ausgebildet und das Angusssystem weist mindestens ein Stellmittel zum Einstellen eines Abstands zwischen dem Flanschabschnitt und dem Befestigungsmittel auf.

Durch das Einstellen bzw. das Variieren dieses Abstands kann folglich auch die Eintauchtiefe des Rohrabschnitts in das Spritzgusswerkzeug, auch einfach als Werkzeug bezeichnet, eingestellt werden. Somit kann innerhalb des Werkzeugs ein formschlüssiger und fluiddichter Anschlag gegenüber einem stromabwärts weiterführenden Abschnitt des Angusskanals entlang der Einspritzachse, bspw. einem Stangenanguss, ausgebildet werden. Dadurch ist das Angussstück bzw. das Angusssystem für verschiedene Werkzeuge und somit für verschiedene düsenseitige Spritzgussanordnungen verwendbar und kann gleichzeitig die vorgegebenen Toleranzen (H7-g6) erfüllen.

Rohrabschnitt und Flanschabschnitt sind vorzugsweise im Wesentlichen koaxial zur Einspritzachse und hintereinander angeordnet, sodass sie ein durchgehendes Innenrohr, den Angusskanal, ausbilden, wobei das Innenrohr einen konstanten oder einen veränderlichen Querschnitt aufweisen kann. Das Befestigungsmittel weist Abschnitte, Elemente oder Vorrichtungen zum Fixieren und/oder Befestigen des Angussstücks an oder mit dem Werkzeug auf. Ferner ist am Befestigungsmittel eine Zentriervorrichtung zum Zentrieren des Angussstücks und somit des Angusskanals koaxial zur Einspritzachse vorgesehen. Das Befestigungsmittel kann die Fixiervorrichtung und die Zentriervorrichtung einstückig ausgebildet oder mit einer lösbaren Verbindung gekoppelt aufweisen.

In einer vorteilhaften Ausführungsform der Erfindung weist das Befestigungsmittel eine Durchführung auf, wobei die Begrenzungswandungen der Durchführung den Rohrabschnitt des Angussstücks umgeben.

Die Durchführung kann bspw. einen kreisförmigen Querschnitt aufweisen, wobei der Mittelpunkt auf der Einspritzachse liegt. Das Befestigungsmittel ist also zwischen dem Flanschabschnitt und dem Werkzeug, bspw einer Aufspannplatte, angeordnet. Ein Verschieben des Angussstücks entlang der Einspritzachse ist damit grundsätzlich möglich.

Im Rahmen einer optionalen Weiterbildung der Erfindung ist der Abstand zwischen dem Flanschabschnitt und dem Befestigungsmittel mittels wenigstens einer Gewindeverbindung zwischen dem Stellmittel und dem Angussstück und/oder dem Stellmittel und dem Befestigungsmittel eingestellt und/oder einstellbar.

Eine Gewindeverbindung zwischen einem Stellmittel und dem Befestigungsmittel kann darin bestehen, dass eine Befestigungsschraube in eine Innengewindebohrung im Befestigungsmittel eingeschraubt wird. Eine Gewindeverbindung zwischen einem anderen Stellmittel und dem Flanschabschnitt kann darin bestehen, dass eine Stellschraube in eine Flansch-Gewindebohrung eingeschraubt wird. Vorteilhafterweise ist eine Einstellbarkeit des Abstands auch nach erfolgter Endmontage zum Nachjustieren noch möglich.

Bei einer vorteilhaften Weiterbildung weist der Flanschabschnitt eine oder eine Mehrzahl an Flansch-Durchgangsöffnungen zur Durchführung von wenigstens einer Befestigungsschraube und das Befestigungsmittel eine oder eine entsprechende Mehrzahl an Innengewindebohrungen auf, wobei die wenigstens eine Befestigungsschraube zur Einstellung das Abstands zwischen dem Angussstück und dem Befestigungsmittel, die Flansch-Durchgangsöffnung durchsetzend, in eine Innengewindebohrung eingreift.

Je tiefer die Befestigungsschraube in die Innengewindebohrung des Befestigungsmittels eingeschraubt wird, desto kleiner wird der Abstand zwischen dem Flanschabschnitt und dem Befestigungsmittel. Der Schraubenkopf der Befestigungsschraube kann einen Anschlag für den Flanschabschnitt ausbilden. Dadurch wird das Angussstück einerseits lösbar am Befestigungsmittel fixiert und andererseits gegen ein Verdrehen um die Einspritzachse arretiert.

In einer weiteren vorteilhaften Ausführungsform der Erfindung kann der Flanschabschnitt eine oder eine Mehrzahl an Flansch-Gewindebohrungen zum Eingriff mit wenigstens einer Stellschraube aufweisen, wobei sich die wenigstens eine Stellschraube in eine jeweilige Flansch-Gewindebohrung eingreifend an dem Befestigungsmittel, zur Einstellung des Abstands zwischen dem Flanschabschnitt und dem Befestigungsmittel, mit einer Anschlagfläche abstützt.

Je tiefer also die Stellschraube in die Flansch-Gewindebohrung eingeschraubt wird, desto größer wird der Abstand zwischen dem Flanschabschnitt und dem Befestigungsmittel. Das dem Schraubenkopf der Stellschraube abgewandte Ende kann dabei eine Anschlagfläche zur Ausbildung eines, vorzugsweise flächigen, Anschlagkontakts mit dem Befestigungsmittel ausbilden. Im Idealfall bilden Befestigungsschraube und Stellschraube jeweils einen Anschlag für das Angussstück aus, die ein unbeabsichtigtes Verschieben entlang der Einspritzachse verhindern. Durch ein aufeinander abgestimmtes Verdrehen von Befestigungsschraube und/oder Stellschraube kann der Abstand zwischen dem Flanschabschnitt und der Befestigungsmittel auch nach der Montage noch nachjustiert werden.

Vorteilhafterweise sind die Mehrzahl an Flansch-Durchgangsöffnungen und/oder Flansch-Gewindebohrungen kranzförmig oder als Lochkranz um die Einspritzachse herum angeordnet, wobei der Mittelpunkt des Lochkranzes auf der Einspritzachse liegt.

Dadurch können mehrere Gewindeverbindungen entlang des Flanschabschnitts angeordnet werden, was die Stabilität des Angusssystems verbessert.

Zusätzlich kann, in einer vorteilhaften Ausgestaltung der Erfindung, die Anzahl an Flansch-Durchgangsöffnungen und Flansch-Gewindebohrungen identisch sein, wobei eine oder jede Flansch-Durchgangsöffnung zwischen zwei Flansch-Gewindebohrungen platziert ist und/oder eine oder jede Flansch-Gewindebohrung zwischen zwei Flansch-Durchgangsöffnungen platziert ist.

Die Öffnungen bzw. Bohrungen können also entlang eines Lochkranzes alternierend angeordnet sein, was die Kräfte, die auf den Flanschabschnitt bzw. das Angussstück wirken, gleichmäßig verteilt.

Eigenständiger Erfindungsschutz wird beansprucht für ein Montageverfahren für ein Angusssystem für eine düsenseitige Spritzgussanordnung einer Spritzgussmaschine zum Einleiten eines plastifizierbaren und/oder plastifizierten Kunststoffmaterials von einer Einspritzvorrichtung in ein Werkzeug entlang eines Angusskanals, dessen Mittelachse eine Einspritzachse festlegt, insbesondere für ein Angusssystem in einer der zuvor beschriebenen Ausführungsformen, wobei das Montageverfahren zumindest folgende Schritte aufweist:
- Schritt 1: Einführen eines Stellmittels, zur Einstellung eines Abstands zwischen einem Flanschabschnitt und einem Befestigungsmittel, in den Flanschabschnitt;
- Schritt 2: Einschieben eines Rohrabschnitts des Angussstücks durch eine Durchführung in dem Befestigungsmittel;
- Schritt 3: Befestigen des Angussstücks, insbesondere des Flanschabschnitts, mit dem Befestigungsmittel;
- Schritt 4: Befestigen des Befestigungsmittels mit dem Werkzeug in der düsenseitigen Spritzgussanordnung.

Durch dieses Montageverfahren kann das Angussstück aus dem Werkzeug bzw. der düsenseitigen Spritzgussanordnung ausgebaut werden, ohne das ganze Angusssystem ausbauen zu müssen, womit ca. 3-5 Stunden Montagearbeit eingespart werden können.

Besonders vorteilhaft ist es, wenn zusätzlich Schritt 1 ausgeführt wird, indem wenigstens eine Stellschraube oder wenigstens ein sonstiges Stellmittel für einen festgelegten Abstand zwischen dem Flanschabschnitt und dem Befestigungsmittel in Eingriff mit einer oder mehrerer Flansch-Gewindebohrungen eingeschraubt und/oder eingeschoben wird, bis eine Anschlagfläche für einen Anschlagkontakt zur Abstützung der Stellschraube oder eines sonstigen Stellmittels ausgebildet oder ausbildbar ist.

Die Aufgabe wird erfindungsgemäß außerdem dadurch gelöst, dass bei Schritt 3 wenigstens eine Befestigungsschraube oder wenigstens ein sonstiges Mittel soweit in eine Innengewindebohrung in dem Befestigungsmittel eingeschraubt und/oder eingeschoben wird, bis sich zwischen dem Befestigungsmittel und einer Anschlagfläche und/oder zwischen dem Flanschabschnitt und einer Anschlagfläche ein Anschlagkontakt ausbildet.

Fig. 1 eine perspektivische Schnittdarstellung einer düsenseitigen Spritzgussanordnung aus dem Stand der Technik. Fig. 2 zeigt eine weitere perspektivische Schnittdarstellung einer düsenseitigen Spritzgussanordnung aus dem Stand der Technik mit ausgeblendetem Angussstück. Weitere vorteilhafte Ausgestaltungen der Erfindung sind in der folgenden Figurenbeschreibung offenbart.

Es zeigen
- Fig. 3: eine perspektivische Explosionsansicht einer beispielhaften Ausführung eines erfindungsgemäßen Angusssystems,
- Fig. 4a: eine erste perspektivische Darstellung einer beispielhaften Ausführung eines erfindungsgemäßen Angusssystems,
- Fig. 4b: eine weitere perspektivische Darstellung einer beispielhaften Ausführung eines erfindungsgemäßen Angusssystems, und
- Fig. 5: eine perspektivische Schnittdarstellung einer düsenseitigen Spritzgussanordnung einer beispielhaften erfindungsgemäßen Ausführung.

In den unterschiedlichen Figuren sind gleiche Teile stets mit denselben Bezugszeichen versehen, weswegen diese in der Regel auch nur einmal beschrieben werden. Es sei ferner darauf hingewiesen, dass eingezeichnete, teilweise aber nicht mit Bezugszeichen versehenen Hilfslinien der Übersichtlichkeit dienen, und die Erfindung keinesfalls auf ausschließlich oder überwiegend symmetrische Ausführungsformen beschränkt werden soll.

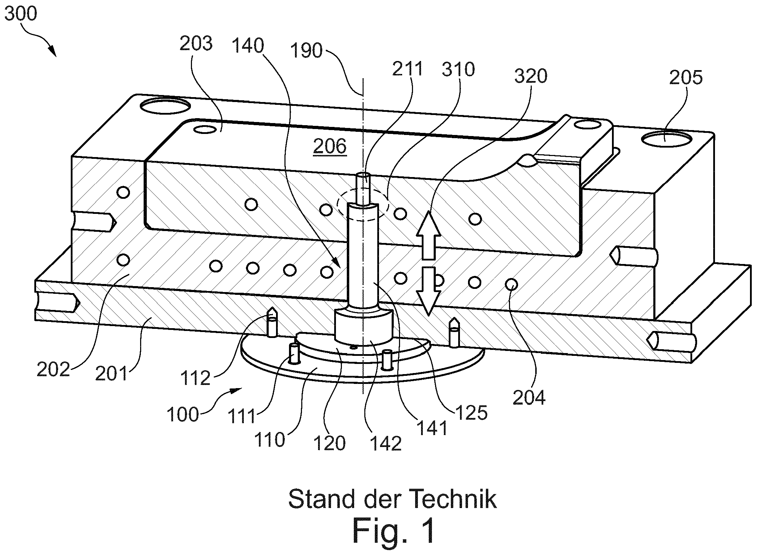

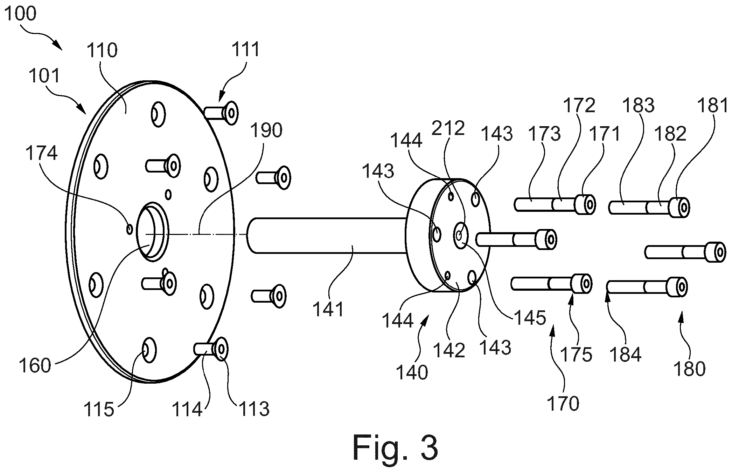

Figur 1 zeigt eine düsenseitige Spritzgussanordnung 300 mit den düsenseitigen Komponenten eines Werkzeugs und mit einem Angusssystem 100 gemäß dem Stand der Technik. Ein Werkzeug besteht aus mehreren schichtartig übereinander gelegten Platten, wobei in der vorliegenden Ausführung das Angusssystem 100 an einer Aufspannplatte 201 montiert wird. Nach innen, also zum zu fertigen Werkstück hin ist flächig anliegend an die Aufspannplatte 201 eine Formplatte 202 vorgesehen, an die sich wiederum flächig anliegend ein Formeinsatz 203 anschließt. Formplatte 202 und Formeinsatz 203 weisen Durchbrechungen für ein Leitungssystem, bspw ein Kühlsystem 204, zur Temperierung der düsenseitigen Spritzgussanordnung 300 auf. Beim Öffnen und Schließen wird eine Hälfte eines Werkzeugs entlang von Führungselementen geführt, wofür in der Formplatte 202 Führungselement-Vertiefungen 205 vorgesehen sind. Die Kavität 206 innerhalb des Formeinsatzes 203 bildet den Hohlraum, in dem der plastifizierte Kunststoff ausgehärtet. Der plastifizierte Kunststoff wird von einer nicht dargestellten Einspritzvorrichtung, bspw einer Düse, durch einen Angusskanal 212 entlang einer Einspritzachse 190 eingespritzt. Der Angusskanal 212 verläuft im Wesentlichen innerhalb eines Angussstücks 140, wobei zwischen Angussstück 140 und der Kavität 206 noch ein Stangenanguss 211 frei bleibt. Das Angussstück 140 ist typischerweise ein aufgebohrtes Gussteil aus nicht korrosivem Stahl, welches spanend nachbearbeitet ist. Der Angusskanal 212 innerhalb des Angussstücks 140 kann einen konischen oder zylindrischen Verlauf aufweisen. Das Angussstück 140 weist ferner einen Rohrabschnitt 141 und einen Flanschabschnitt 142 auf, wobei der Flanschabschnitt 142 koaxial angeordnet als Rohrflansch des Rohrabschnitts 141 zu verstehen ist. Das Angussstück 140 wird über ein Befestigungsmittel 101 (vgl. Figur 3) am Werkzeug gehalten.

Dabei sind die Mantelflächen des Rohrabschnitts 141 und des Flanschabschnitts 142 formschlüssig von Aufspannplatte 201, Formplatte 202 und Formeinsatz 203 umfasst. An dem der Kavität 206 zugewandten Endabschnitt des Rohrabschnitts 141 bildet außerdem die Stirnwandung des Rohrabschnitts 141 einen Anschlag 310 mit dem Formeinsatz 203. Insbesondere an diesem Anschlag 310 müssen die vorgegebenen Toleranzklassen der Passung einhalten werden. Somit muss die richtige Länge des Angussstücks 140 gewählt werden, da nur sehr geringe Toleranzen (H7-g6) zwischen Angussstück 140 und Werkzeug zulässig sind. Es ist zusätzlich kein Bewegungsspielraum 320 gegeben, das Angussstück 140 weiter in das Werkzeug hineinzuschieben, wenn sich ein unerwünschtes Spiel zwischen dem Ende des Rohrabschnitts 141 und dem Formeinsatz 203 oder einer sonstigen Platte des Werkzeugs ergibt. Das Angussstück 140 ist ferner im Wesentlichen rotationssymmetrisch um die Einspritzachse 190 ausgebildet, jedoch können (nicht dargestellte) Arretiersicherungen gegen ein Verdrehen des Angussstücks 140 um die Rotationsachse vorgesehen sein.

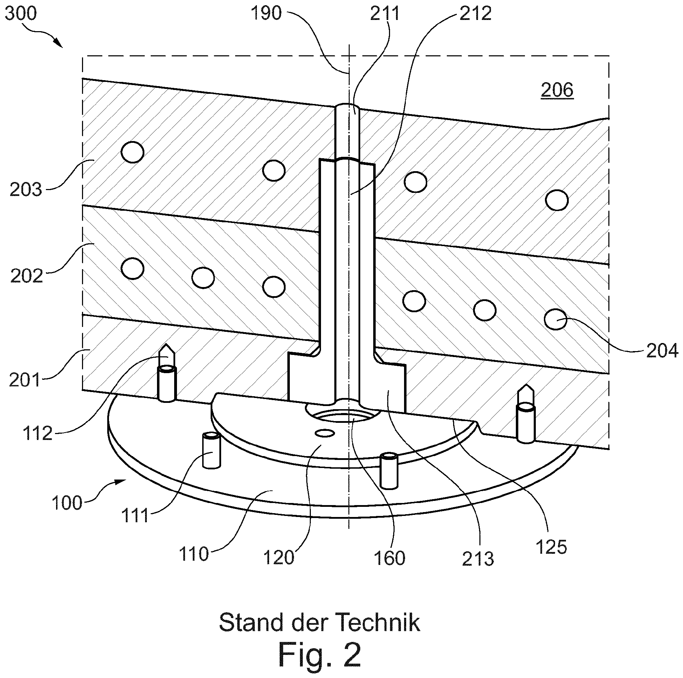

Das Befestigungsmittel 101 (vgl. Figur 3), welches das Angussstück 140 im Werkzeug hält, weist eine Fixiervorrichtung 110 und eine Zentriervorrichtung 120 auf, wobei beide als kreisrunde Metallplatten ausgebildet und schichtartig übereinandergelegt sind. Sowohl in der Fixiervorrichtung 110, als auch in der Zentriervorrichtung 120 ist eine Durchführung 160 (vgl. Figur 2) vorgesehen, durch die der Einspritzkanal 212 verläuft. Fixiervorrichtung 110 und Zentriervorrichtung 120 sind koaxial zueinander, zum Angussstück 140 und zur Einspritzachse 190 angeordnet. Die Fixiervorrichtung 110 weist zur Befestigung mit der Aufspannplatte 201 Fixiervorrichtung-Durchgangsbohrungen 115 auf, durch die Fixierschrauben 111 oder sonstige Fixiermittel geführt werden können. Die Fixierschrauben 111 können zur Montage in Eingriff mit Sacklochbohrungen 112 in der Aufspannplatte 201 gebracht werden. Zur formschlüssigen Aufnahme der Zentriervorrichtung 120 weist die Aufspannplatte 201 eine zur Zentriervorrichtung 120 komplementäre Zentriervertiefung 125, beispielsweise eine Tasche, auf.

Figur 2 zeigt einen Ausschnitt der düsenseitigen Spritzgussanordnung 300 mit ausgeblendetem Angussstück 140. Im Bereich des Flanschabschnitts 142 (vgl. Figur 1) ist die Ausnehmung in der Aufspannplatte 201 zur Ausbildung einer Flansch-Aussparung 213 verbreitert. Durch das Ausblenden ist auch die Durchführung 160 darstellbar, durch welche beim Einspritzvorgang die Düse einer Einspritzvorrichtung geführt und am Flanschabschnitt 142 (vgl. Figur 1) angesetzt werden kann.

Figur 3 zeigt ein erfindungsgemäßes Angusssystem 100 in einer Explosionszeichnung. Dabei wird die dargestellte Fixiervorrichtung 110 des Befestigungsmittels 101 über Fixierschrauben 111 oder sonstige Fixiermittel befestigt, wobei diese durch Fixiervorrichtung-Durchgangsbohrungen 115 geführt und das Schraubengewinde 114 der Fixierschrauben 111 durch Betätigung des Schraubenkopfes 113 in Eingriff mit den Sacklochbohrungen 112 der Aufspannplatte 201 (vgl. Figur 1) gebracht werden können. Der Rohrabschnitt 141 kann entlang der Einspritzachse 190 und in Strömungsrichtung des einzuspritzenden Kunststoffs durch die Durchführung 160 geschoben werden. Der Flanschabschnitt 142 weist mittig eine halbkugelförmige Vertiefung 145 zum formschlüssigen "Andocken" der Düse einer Einspritzvorrichtung und damit den Eintritt in den Angusskanal 212 auf. Um den Mittelpunkt des Flanschabschnitts 142 bzw. um die Einspritzachse 190 herum sind als Lochkranz drei Flansch-Durchgangsöffnungen 143 und drei Flansch-Gewindebohrungen 144, alternierend zueinander angeordnet, vorgesehen.

Für jede Flansch-Gewindebohrung 144 ist eine Stellschraube 180 vorgesehen, welche einen Stellschrauben-Kopf 181, einen Stellschrauben-Schaft 182 und ein Stellschrauben-Gewinde 183 aufweist. An dem von dem Stellschrauben-Kopf 181 abgewandten Ende einer Stellschraube 180 ist eine Wandung vorgesehen, welche eine Anschlagfläche 184 gegenüber dem Befestigungsmittel 101 ausbilden kann. Das Stellschrauben-Gewinde 183 ist für eine Gewindeverbindung mit der Flansch-Gewindebohrung 144 vorgesehen. Ferner ist für jede Flansch-Durchgangsöffnung 143 eine Befestigungsschraube 170 vorgesehen, welche ebenfalls einen Befestigungsschrauben-Kopf 171, einen Befestigungsschrauben-Schaft 172 und ein Befestigungsschrauben-Gewinde 173 aufweist. Das Befestigungsschrauben-Gewinde 173 ist für eine Gewindeverbindung mit der Innengewindebohrung 174 im Befestigungsmittel 101 vorgesehen. An dem Befestigungsschrauben-Kopf 171 einer Befestigungsschraube 170 ist ebenfalls eine Wandung vorgesehen, welche eine Anschlagfläche 175 gegenüber dem Flanschabschnitt 142 ausbilden kann.

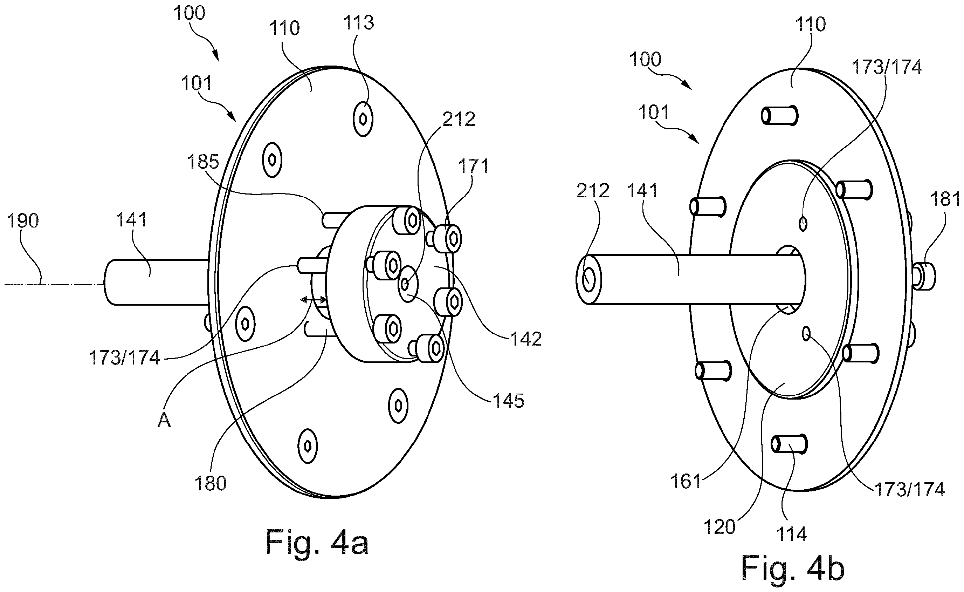

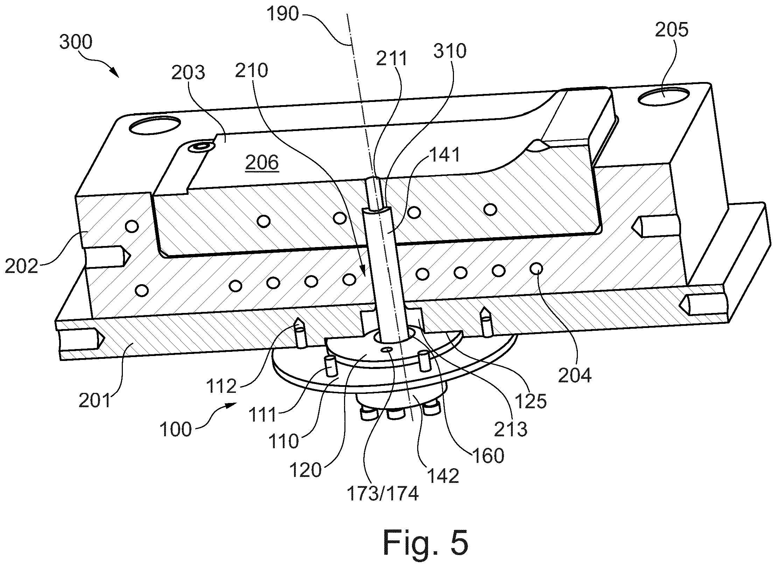

Figur 4a zeigt ein zusammengebautes Angusssystem 100, wobei durch die Stellmittel, hier die Befestigungsschrauben 170 und die Stellschrauben 180 ein Abstand A zwischen dem Flanschabschnitt 142 und dem Befestigungsmittel 101 einstellbar ist. Der Flanschabschnitt 142 weist im Zusammenbau eine Seite bzw. Wandung auf, die dem Befestigungsmittel 101 zugewandt ist. Von dieser Seite des Flanschabschnitts 142 ragt ein Stellschrauben-Schaft 182 bzw. ein Stellschrauben-Gewinde 183 einer den Flanschabschnitt 142 durchsetzenden Stellschraube 180 weg. Der Abstand A entspricht dabei vorzugsweise der Länge dieses wegragenden Abschnitts der Stellschraube 180. Die Anschlagfläche 184 (vgl. Figur 3) der Stellschrauben 180 bildet einen Anschlagkontakt 185 mit einer Wandung des Befestigungsmittels 101 aus. Anders ausgedrückt wird somit durch die Relativposition bzw. die Relativbewegung zwischen den Stellschrauben 180 und dem Flanschelement 142 und/oder durch die Eindringtiefe der Stellschrauben 180 in die Flansch-Gewindebohrungen 144 des Flanschelements 142 die Position der Anschlagfläche 184 festgelegt. Dafür sollten zweckmäßigerweise gleich lange Stellschrauben 180 die gleiche Relativposition bzw. die gleiche Eindringtiefe aufweisen. Ein weiteres Einschieben des Angussstücks 140 in das Befestigungsmittel 101 und damit in das Werkzeug (vgl. Figur 5) ist damit nicht mehr möglich. Ein weiteres Eindrehen der Stellschrauben 180 in die Flansch-Gewindebohrung 144, sofern möglich, vergrößert den Abstand A. Das Angussstück 140 wird nachjustiert.

Figur 4b zeigt das Angusssystem 100 aus der Perspektive, die nach Einbau in die düsenseitige Spritzgussanordnung 300 (vgl. Figur 5) im Betrachter verborgen ist. Die maximale Einschraubtiefe der Befestigungsschrauben-Gewinde 173 der Befestigungsschrauben 170 in die Innengewindebohrung 174 des Befestigungsmittels 101 wird durch die geometrischen Abmessungen von Fixiervorrichtung 110 und Zentriervorrichtung 120, bspw. der Dicke der Metallscheiben, vorgegeben. Ferner ist ein Spiel zwischen den Begrenzungswandungen 161 der Durchführung 160 und der Außenwandung des Rohrabschnitts 141 gegeben, welches jedoch bei entsprechender Wahl der geometrischen Abmessungen reduziert werden kann.

Figur 5 zeigt den Einbau des erfindungsgemäßen Angusssystems 100 in die düsenseitige Spritzgussanordnung 300. Durch die Variierbarkeit des Abstands A (vgl. Figur 4a) ist zwischen Rohrabschnitt 141 und dem Formeinsatz 203 stets ein Anschlag 310 zur Ausbildung eines durchgehenden Angusskanal des 212 (vgl. Figur 2) ausbildbar. Auch die noch dargestellte Flansch-Aussparung 213 in der Aufspannplatte 201 kann entfallen, womit ein Bearbeitungsschritt entfällt. Bearbeitungsschritte entfallen auch, weil durch die Gewindeverbindung zwischen Befestigungsschrauben-Gewinde 173 und den Innengewindebohrungen 174 des Befestigungsmittels 101 (vgl. Figur 3) eine zusätzliche Verdrehsicherung oder Arretierung gegen ein Verdrehen des Angussstücks 140 um die Einspritzachse 190 herum entfallen kann.

### Bezugszeichenliste:

- 100: Angusssystem
- 101: Befestigungsmittel
- 110: Fixiervorrichtung
- 111: Fixierschraube
- 112: Sacklochbohrung
- 113: Schraubenkopf
- 114: Schraubengewinde
- 115: Fixiervorrichtung-Durchgangsbohrung
- 120: Zentriervorrichtung
- 125: Zentriervertiefung
- 140: Angussstück
- 141: Rohrabschnitt
- 142: Flanschabschnitt
- 143: Flansch-Durchgangsöffnung
- 144: Flansch-Gewindebohrung
- 145: Vertiefung
- 160: Durchführung
- 161: Begrenzungswandung
- 170: Befestigungsschraube
- 171: Befestigungsschrauben-Kopf
- 172: Befestigungsschrauben-Schaft
- 173: Befestigungsschrauben-Gewinde
- 174: Innengewindebohrung
- 175: Anschlagfläche
- 180: Stellschraube
- 181: Stellschrauben-Kopf
- 182: Stellschrauben-Schaft
- 183: Stellschrauben-Gewinde
- 184: Anschlagfläche
- 185: Anschlagkontakt
- 190: Einspritzachse
- 201: Aufspannplatte
- 202: Formplatte
- 203: Formeinsatz
- 204: Kühlsystem
- 205: Führungselement-Vertiefung
- 206: Kavität
- 211: Stangenanguss
- 212: Angusskanal
- 213: Flansch-Aussparung
- 300: düsenseitige Spritzgussanordnung
- 310: Anschlag
- 320: Bewegungsspielraum
- A: Abstand

## Patentansprüche

1. Angusssystem (100) für eine düsenseitige Spritzgussanordnung (300) einer Spritzgussmaschine zum Einleiten eines plastifizierbaren und/oder plastifizierten Kunststoffmaterials in ein Spritzgusswerkzeug der Spritzgussmaschine entlang eines Angusskanals (212), dessen Mittelachse eine Einspritzachse (190) festlegt, wobei das Angusssystem (100) aufweist
- ein den Angusskanal (212) zumindest teilweise ausbildendes Angussstück (140) mit einem Rohrabschnitt (141) und einem Flanschabschnitt (142), sowie ein
- Befestigungsmittel (101) zur Befestigung des Angusssystems (100) mit dem Spritzgusswerkzeug und zur Ausrichtung des Angussstücks (140) entlang der Einspritzachse (190),
wobei das Angussstück (140) und das Befestigungsmittel (101) zueinander verstellbar ausgebildet sind und das Angusssystem (100) mindestens ein Stellmittel zum Einstellen eines Abstands (A) zwischen dem Flanschabschnitt (142) des Angussstücks (140) und dem Befestigungsmittel (101) aufweist, **dadurch gekennzeichnet, dass**
der Flanschabschnitt (142) eine oder eine Mehrzahl an Flansch-Gewindebohrungen (144) zum Eingriff mit wenigstens einer Stellschraube (180) aufweist, wobei sich die wenigstens eine Stellschraube (180) in eine jeweilige Flansch-Gewindebohrung (144) eingreifend an dem Befestigungsmittel (101), zur Einstellung des Abstands (A) zwischen dem Flanschabschnitt (142) und dem Befestigungsmittel (101), mit einer Anschlagfläche (184) abstützt.

2. Angusssystem (100) nach Anspruch 1,
**dadurch gekennzeichnet, dass**
das Befestigungsmittel (101) eine Durchführung (160) aufweist, wobei die Begrenzungswandungen (161) der Durchführung (160) den Rohrabschnitt (141) des Angussstücks (140) umgeben.

3. Angusssystem (100) nach Anspruch 1 oder 2,
**dadurch gekennzeichnet, dass**
der Abstand (A) zwischen dem Flanschabschnitt (142) und dem Befestigungsmittel (101) mittels mindestens einer Gewindeverbindung zwischen dem Stellmittel und dem Angussstück (140) und/oder dem Stellmittel und dem Befestigungsmittel (101) eingestellt und/oder einstellbar ist.

4. Angusssystem (100) nach einem der vorhergehenden Ansprüche,
**dadurch gekennzeichnet, dass**
der Flanschabschnitt (142) eine oder eine Mehrzahl an Flansch-Durchgangsöffnungen (143) zur Durchführung von wenigstens einer Befestigungsschraube (170) und das Befestigungsmittel (101) eine oder eine entsprechende Mehrzahl an Innengewindebohrungen (174) aufweist, wobei die wenigstens eine Befestigungsschraube (170) zur Einstellung das Abstands (A) zwischen dem Angussstück (140) und dem Befestigungsmittel (101) die Flansch-Durchgangsöffnungen (143) durchsetzend in eine Innengewindebohrung (174) eingreift.

5. Angusssystem (100) nach einem der vorhergehenden Ansprüche,
**dadurch gekennzeichnet, dass**
die Mehrzahl an Flansch-Durchgangsöffnungen (143) und/oder Flansch-Gewindebohrungen (144) kranzförmig oder als Lochkranz um die Einspritzachse (190) herum angeordnet sind.

6. Angusssystem (100) nach einem der vorhergehenden Ansprüche,
**dadurch gekennzeichnet, dass**
die Anzahl an Flansch-Durchgangsöffnungen (143) und Flansch-Gewindebohrungen (144) identisch ist, wobei eine oder jede Flansch-Durchgangsöffnung (143) zwischen zwei Flansch-Gewindebohrungen (144) platziert ist und/oder eine oder jede Flansch-Gewindebohrung (144) zwischen zwei Flansch-Durchgangsöffnungen (143) platziert ist.

7. Montageverfahren für ein Angusssystem (100) mit einem Befestigungsmittel (101) und einem Angussstück (140), insbesondere nach einem der vorhergehenden Ansprüche, für eine düsenseitige Spritzgussanordnung (300) einer Spritzgussmaschine zum Einleiten eines plastifizierbaren und/oder plastifizierten Kunststoffmaterials von einer Einspritzvorrichtung in ein Spritzgusswerkzeug der Spritzgussmaschine entlang eines Angusskanals (212), dessen Mittelachse eine Einspritzachse (190) festlegt, welches Montageverfahren zumindest folgende Schritte aufweist:
- Schritt 1: Einführen eines Stellmittels, zur Einstellung eines Abstands (A) zwischen einem Flanschabschnitt (142) des Angussstücks (140) und einem Befestigungsmittel (101), in den Flanschabschnitt (142);
- Schritt 2: Einschieben eines Rohrabschnitts (141) des Angussstücks (140) durch eine Durchführung (160) in dem Befestigungsmittel (101);
- Schritt 3: Befestigen des Angussstücks (140) mit dem Befestigungsmittel (101);
- Schritt 4: Befestigen des Befestigungsmittels (101) mit dem Spritzgusswerkzeug,
**dadurch gekennzeichnet, dass**
Schritt 1 ausgeführt wird, indem mindestens eine Stellschraube (180) oder mindestens ein sonstiges Stellmittel für einen festgelegten Abstand (A) zwischen dem Flanschabschnitt (142) und dem Befestigungsmittel (101) in Eingriff mit einer oder mehrerer Flansch-Gewindebohrungen (144) eingeschraubt und/oder eingeschoben wird, bis eine Anschlagfläche (184) für einen Anschlagkontakt (185) zur Abstützung der Stellschraube (180) oder eines sonstigen Stellmittels ausgebildet oder ausbildbar ist.

8. Montageverfahren nach Anspruch 7,
**dadurch gekennzeichnet, dass**
Schritt 3 ausgeführt wird, indem wenigstens eine Befestigungsschraube (170) oder wenigstens ein sonstiges Mittel zur Befestigung derart tief in eine Innengewindebohrung (174) in dem Befestigungsmittel (101) eingeschraubt und/oder eingeschoben wird, bis sich zwischen dem Befestigungsmittel (101) und einer Anschlagfläche (184) und/oder zwischen dem Flanschabschnitt (142) und einer Anschlagfläche (175) ein Anschlagkontakt (185) ausbildet.

## Claims

1. Sprue system (100) for a nozzle-side injection-moulding arrangement (300) of an injection-moulding machine for introducing a plasticizable and/or plasticized plastics material into an injection-moulding tool of the injection-moulding machine along a runner (212), the centre axis of which fixes an injection axis (190), the sprue system (100) having
- a sprue piece (140), which at least partially forms the runner (212) and comprises a tube portion (141) and a flange portion (142), and also a
- fastening means (101) for fastening the sprue system (100) to the injection-moulding tool and for aligning the sprue piece (140) along the injection axis (190),
wherein the sprue piece (140) and the fastening means (101) are formed adjustably in relation to one another and the sprue system (100) has at least one adjusting means for setting a distance (A) between the flange portion (142) of the sprue piece (140) and the fastening means (101),
**characterized in that**
the flange portion (142) has one or a plurality of flange threaded bores (144) for engagement with at least one adjusting screw (180), the at least one adjusting screw (180), while engaging in a respective flange threaded bore (144), being supported with a stop face (184) on the fastening means (101), for setting the distance (A) between the flange portion (142) and the fastening means (101).

2. Sprue system (100) according to Claim 1,
**characterized in that**
the fastening means (101) has a lead-through (160), the delimiting walls (161) of the lead-through (160) surrounding the tube portion (141) of the sprue piece (140) .

3. Sprue system (100) according to Claim 1 or 2,
**characterized in that**
the distance (A) between the flange portion (142) and the fastening means (101) is set and/or can be set by means of at least one threaded connection between the adjusting means and the sprue piece (140) and/or the adjusting means and the fastening means (101).

4. Sprue system (100) according to one of the preceding claims,
**characterized in that**
the flange portion (142) has one or a plurality of flange through-openings (143) for leading through at least one fastening screw (170) and the fastening means (101) has one or a corresponding plurality of internal threaded bores (174), the at least one fastening screw (170) for setting the distance (A) between the sprue piece (140) and the fastening means (101) passing through the flange through-openings (143) and engaging in an internal threaded bore (174) .

5. Sprue system (100) according to one of the preceding claims,
**characterized in that**
the plurality of flange through-openings (143) and/or flange threaded bores (144) are arranged around the injection axis (190) in the form of a ring or as a ring of holes.

6. Sprue system (100) according to one of the preceding claims,
**characterized in that**
the number of flange through-openings (143) and flange threaded bores (144) is identical, one or each flange through-opening (143) being placed between two flange threaded bores (144) and/or one or each flange threaded bore (144) being placed between two flange through-openings (143).

7. Assembly method for a sprue system (100) comprising a fastening means (101) and a sprue piece (140), in particular according to one of the preceding claims, for a nozzle-side injection-moulding arrangement (300) of an injection-moulding machine for introducing a plasticizable and/or plasticized plastics material from an injection device into an injection-moulding tool of the injection-moulding machine along a runner (212), the centre axis of which fixes an injection axis (190), which assembly method comprises at least the following steps:
- step 1: introducing an adjusting means, for setting a distance (A) between a flange portion (142) of the sprue piece (140) and a fastening means (101), into the flange portion (142);
- step 2: pushing a tube portion (141) of the sprue piece (140) through a lead-through (160) in the fastening means (101);
- step 3: fastening the sprue piece (140) to the fastening means (101);
- step 4: fastening the fastening means (101) to the injection-moulding tool,
**characterized in that**
step 1 is performed **in that**, for a fixed distance (A) between the flange portion (142) and the fastening means (101), at least one adjusting screw (180) or at least one other adjusting means is screwed in and/or pushed in while engaging with one or more flange threaded bores (144), until a stop face (184) for a stop contact (185) for supporting the adjusting screw (180) or some other adjusting means is formed or can be formed.

8. Assembly method according to Claim 7,
**characterized in that**
step 3 is performed **in that** at least one fastening screw (170) or at least one other means for fastening is screwed and/or pushed far into an internal threaded bore (174) in the fastening means (101) in such a manner that a stop contact (185) forms between the fastening means (101) and a stop face (184) and/or between the flange portion (142) and a stop face (175) .

## Revendications

1. Système de moulage (100) pour un agencement de moulage par injection côté buse (300) d'une machine de moulage par injection pour introduire une matière plastique plastifiable et/ou plastifiée dans un outil de moulage par injection de la machine de moulage par injection le long d'un canal de carotte (212) dont l'axe médian définit un axe d'injection (190), le système de moulage (100) présentant :
- une pièce de carotte (140) constituant au moins en partie le canal de carotte (212), comprenant une portion tubulaire (141) et une portion de bride (142), et
- un moyen de fixation (101) pour fixer le système de moulage (100) à l'outil de moulage par injection et pour orienter la pièce de carotte (140) le long de l'axe d'injection (190),
la pièce de carotte (140) et le moyen de fixation (101) étant réalisés de manière déplaçable l'un par rapport à l'autre et le système de moulage (100) présentant au moins un moyen de réglage pour ajuster une distance (A) entre la portion de bride (142) de la pièce de carotte (140) et le moyen de fixation (101),
**caractérisé en ce que**
la portion de bride (142) présente un ou plusieurs alésages filetés de bride (144) pour l'engagement avec au moins une vis de réglage (180), l'au moins une vis de réglage (180) s'appuyant avec une surface de butée (184) contre le moyen de fixation (101) de manière à s'engager dans un alésage fileté de bride respectif (144), pour ajuster la distance (A) entre la portion de bride (142) et le moyen de fixation (101).

2. Système de moulage (100) selon la revendication 1,
**caractérisé en ce que**
le moyen de fixation (101) présente un passage (160), les parois de limitation (161) du passage (160) entourant la portion tubulaire (141) de la pièce de carotte (140).

3. Système de moulage (100) selon la revendication 1 ou 2,
**caractérisé en ce que**
la distance (A) entre la portion de bride (142) et le moyen de fixation (101) est ajustée et/ou peut être ajustée au moyen d'au moins une liaison filetée entre le moyen de réglage et la pièce de carotte (140) et/ou le moyen de réglage et le moyen de fixation (101).

4. Système de moulage (100) selon l'une quelconque des revendications précédentes,
**caractérisé en ce que**
la portion de bride (142) présente une ou plusieurs ouvertures de passage de bride (143) pour le passage d'au moins une vis de fixation (170) et le moyen de fixation (101) présente un ou plusieurs alésages filetés intérieurs correspondants (174), l'au moins une vis de fixation (170), pour l'ajustement de la distance (A) entre la pièce de carotte (140) et le moyen de fixation (101), s'engageant dans un alésage fileté intérieur (174) en traversant les ouvertures de passage de bride (143).

5. Système de moulage (100) selon l'une quelconque des revendications précédentes,
**caractérisé en ce que**
la pluralité d'ouvertures de passage de bride (143) et/ou d'alésages filetés de bride (144) sont disposés en forme de couronne ou sous forme de couronne perforée autour de l'axe d'injection (190) .

6. Système de moulage (100) selon l'une quelconque des revendications précédentes,
**caractérisé en ce que**
le nombre des ouvertures de passage de bride (143) et d'alésages filetés de bride (144) est identique, une ou chaque ouverture de passage de bride (143) étant placée entre deux alésages filetés de bride (144) et/ou un ou chaque alésage fileté de bride (144) étant placé entre deux ouvertures de passage de bride (143).

7. Procédé de montage pour un système de moulage (100) comprenant un moyen de fixation (101) et une pièce de carotte (140), en particulier selon l'une quelconque des revendications précédentes, pour un agencement de moulage par injection côté buse (300) d'une machine de moulage par injection pour introduire une matière plastique plastifiable et/ou plastifiée depuis un dispositif d'injection dans un outil de moulage par injection de la machine de moulage par injection le long d'un canal de carotte (212) dont l'axe médian définit un axe d'injection (190), le procédé de montage présentant au moins les étapes suivantes :
- étape 1 : introduction d'un moyen de réglage pour ajuster une distance (A) entre une portion de bride (142) de la pièce de carotte (140) et un moyen de fixation (101), dans la portion de bride (142) ;
- étape 2 : insertion d'une portion tubulaire (141) de la pièce de carotte (140) à travers un passage (160) dans le moyen de fixation (101) ;
- étape 3 : fixation de la pièce de carotte (140) avec le moyen de fixation (101) ;
- étape 4 : fixation du moyen de fixation (101) avec l'outil de moulage par injection,
**caractérisé en ce que**
l'étape 1 est réalisée en vissant et/ou en enfonçant au moins une vis de réglage (180) ou au moins un autre moyen de réglage sur une distance fixée (A) entre la portion de bride (142) et le moyen de fixation (101) en prise avec un ou plusieurs alésages filetés de bride (144), jusqu'à ce qu'une surface de butée (184) pour un contact de butée (185) soit réalisée ou puisse être réalisée pour supporter la vis de réglage (180) ou un autre moyen de réglage.

8. Procédé de montage selon la revendication 7,
**caractérisé en ce que**
l'étape 3 est réalisée en vissant et/ou en enfonçant au moins une vis de fixation (170) ou au moins un autre moyen de fixation dans un alésage fileté intérieur (174) dans le moyen de fixation (101) à une profondeur telle qu'il se forme un contact de butée (185) entre le moyen de fixation (101) et une surface de butée (184) et/ou entre la portion de bride (142) et une surface de butée (175) .
